# EUROPEAN PATENT APPLICATION

(11) **EP 1 061 521 A1**
(43) Date of publication of application: **20.12.2000**
(21) Application number: 99111781.3
(22) Date of filing: 18.06.1999
(51) Int. Cl.: G11B 27/11, G11B 27/00, G11B 23/36, G11B 27/10, G11B 15/02, G11B 27/34

(54) **Method and apparatus for archiving record carriers**

(71) Applicant: DEUTSCHE THOMSON-BRANDT GMBH, 78048 Villingen-Schwenningen (DE)
(72) Inventor: Bekesi, Thomas, 78078 Niedereschach (DE); Storz, Achim, 78098 Trieberg (DE); Eigeldinger, Norbert, 78048 Villingen (DE); Ketterer, Thomas, 78052 VS-Rietheim (DE); Leute, Rüdiger, 78166 Donaueschingen (DE)
(74) Representative: Hartnack, Wolfgang, Dipl.-Ing.

(57) **Abstract**

Labels are used in order to identify the content of a recording carrier, e.g. a video casette. However, this requires that the user updates the label if he records a new program on the recording carrier. Furthermore, it is difficult to find a certain program when the number of recording carriers gets larger. According to the invention after insert of a recording carrier into a playback device the user is asked to input an identifier of said recording carrier or to declare the recording carrier as new, wherein for a new recording carrier a new identifier is assigned. When a program is recorded, data assigned to the program together with the location of the program on the recording carrier are stored in a rewritable memory of the playback device. The data assigned to the programs can be displayed in order to give an overview over the recorded programs in total or the recorded programs on a certain recording carrier, wherein the identifier of the recording carrier on which the respective programs are stored is also displayed.

## Description

The invention relates to a method and an apparatus for archiving recording carrier, especially for archiving of video casettes.

### Prior art

It is known to use labels in order to identify the content of a recording carrier, e.g. a video casette. However, this requires that the user updates the label if he records a new program on the recording carrier. Furthermore, it is difficult to find a certain program when the number of recording carriers gets larger.

### Invention

The invention is based on the object of specifying a method for archiving recording carrier, which supplies a simple overview over a larger number of recording carriers. This object is achieved by means of the method specified in claim 1.

It is a further object of the invention to disclose an apparatus, which utilises the inventive method. This object is achieved by the apparatus disclosed in claim 8.

In principle, the method for archiving recording carrier, wherein each recording carrier has an own identifier which is different to the identifiers of the other recording carriers, consists in the following steps:
- after insert of a recording carrier into a playback device the user is asked to input an identifier of said recording carrier or to declare the recording carrier as new, wherein for a new recording carrier a new identifier is assigned;
- when a program is recorded, the identifier is stored together with data assigned to the program and the location of the program on the recording carrier in a rewritable memory of the playback device;
- the data assigned to the programs can be displayed in order to give an overview over the recorded programs in total or the recorded programs on a certain recording carrier, wherein the identifier of the recording carrier on which the respective programs are stored is also displayed.

In an advantageous development the identifier of the recording carrier is stored on the recording carrier.

In a further advantageous development the recording carrier is a video casette and the identifier of the video casette is stored automatically on the control track.

Also, it may be particularly advantageous if the identifier is stored automatically in the vertical blanking period of the video signal.

Furthermore, it may be particularly advantageous if the data stored in the rewritable memory of the playback device can be transferred via an interface to an other playback device.

In a further advantageous development for starting playback of a certain program first a rough search based on the remain time and than a fine search based on an index search is performed.

Also, it may be advantageous if the data assigned to the program comprise the title of the program, wherein the title is determined from data transmitted via teletext.

### Exemplary embodiments

According to a first exemplary embodiment no automatic tape detection is performed. Instead the user has to input a tape number of three digits to identify the tape. At the beginning of a recording an index mark is written on the tape. The title and the actual remaining time are stored in a tape library, which is stored in a Flash memory. If a title change is detected during recording the new title is stored with the actual remaining time. Also, if several programs are recorded in a single recording, the titles of the several programs are stored automatically in the tape library.

The title can be fetched from a special title memory or can be determined from the current teletext data. A title memory can be generated e.g. by scanning every day the teletext pages carrying program information of the receivable stations.

The user can review the contents of the loaded cassette, can manual delete titles from the library list, perform a Goto to the beginning of a recording or to a gap. This Goto is a Goto to the remaining time minus some minutes plus an index search to the next index. In the same way an automatic playback start can be performed.

After a cassette is loaded the user has to enter the number of this tape. Only if an available number is inputted the tape library is available and is updated with new recordings. On the other hand, if a new Tape is inserted, this tape is given a new number in order to add it to the library, wherein the new number is displayed to inform the user. If a new numbered cassette is ejected the user can be reminded by the set to label the tape with the new number.

The tape library comprises a title list and a tape list. The title list shows a list of all recordings, e.g. in alphabetic order, on the screen. Also blank parts of the tapes are listed at the end of the list and titles beginning by a number are listed at the beginning. Some titles, e.g. 13 titles, are listed per page and a mean is provided to the user to access rapidely to a title beginning letter. Advantageously, the user can utilize a remote control, wherein by pressing the DOWN and UP button the titles are scaned respectively downwards (A>Z direction) and upwards (Z>A direction) the alphabet. When a new letter is selected, the page with the first title beginning by this letter is displayed with this title on top. If the next letter is already displayed in the screen, this one is then positioned on first line at DOWN key press. If there is less than 13 titles beginning by this letter, the titles beginning by the next (or next after next ...) are displayed below. If no title is existing beginning with the selected letter the next (or next after next ...) are displayed instead if letter is selected at DOWN key press. If no title is existing beginning with the selected letter the previous (or previous before the previous ...) are displayed instead if letter is selected at UP key press. Pressing LEFT and RIGHT keys display the list of titles page per page. A long press on the LEFT or RIGHT key allows the user to access the previous or next page with an increasing search speed.

In the tape list the library is classified per tape. This allows the user to view titles tape per tape. Movies are classified from top to bottom in their order on the tape. Blank spaces of a tape are listed at their right place. A blank space is preceeded by a full foreground colour character to be recognised easily among titles. Pressing the UP and DOWN key allows theuser to select a title. When the cursor is on a title this title can be modified or deleted, wherein a deleted title becomes a blank and is consolidated with next and/or previous one if existing. When the tape library is used with cassette a title can be directly selected, e.g. by using the up/down buttons on the remote control. This title can be automatically started in the following way. First a remain time search will be activated, with target movie start remain time + 4 minutes. After reaching the target an index search is starting. The index search is active until the index mark is found. In case of missing index mark the index search is active till the remain time is 2 min. in SP or 3 min. in LP smaller than the movie start remain time. After that the selected function is directly executing. On the other hand, if the beginning of a tape is reached while title search, a play or stop function is executed.

According to a further exemplary embodiment the tape number is stored on the video casette e.g. on the control track or in the vertical blanking period of the video signal, which allows an automatic tape detection. Furthermore, the assignment of a new tape number for a new tape can be performed automatically.

According to a further exemplary embodiment the titles can be edited later. This is for example useful if several programs with the same title are stored in the title list of the tape library. Furthermore, also the titles of old casettes, which are recorded without using the archiving mehtod, can be edited and stored in the tape library later.

According to another exemplary embodiment the data stored in the rewritable memory of the playback device can be transferred via an interface to an other playback device, wherein the transfer can be performed via AVLink (Scart pin 10). This is especially useful if the first playback device is exchanged by a newer playback device.

The invention can advantageously be used for archiving of video casettes but also applies to archiving of other recording carriers like CD's, DVD's etc.

The invention can be implemented in any kind of playback devices like VCR's, CD- or DVD-players etc.

## Claims

**1.** Method for archiving recording carrier, wherein each recording carrier has an own identifier which is different to the identifiers of the other recording carriers, **characterized by** the following steps:
- after insert of a recording carrier into a playback device the user is asked to input an identifier of said recording carrier or to declare the recording carrier as new, wherein for a new recording carrier a new identifier is assigned;
- when a program is recorded, the identifier is stored together with data assigned to the program and the location of the program on the recording carrier in a rewritable memory of the playback device;
- the data assigned to the programs can be displayed in order to give an overview over the recorded programs in total or the recorded programs on a certain recording carrier, wherein the identifier of the recording carrier on which the respective programs are stored is also displayed.

**1.** Method according to claim 1, **wherein** the identifier of the recording carrier is stored on the recording carrier.

**2.** Method according to claim 2, **wherein** the recording carrier is a video casette and the identifier of the video casette is stored automatically on the control track.

**3.** Method according to claim 2, **wherein** the identifier is stored automatically in the vertical blanking period of the video signal.

**5.** Method according to any of claims 1 to 4, **wherein** the data stored in the rewritable memory of the playback device can be transferred via an interface to an other playback device.

**6.** Method according to any of claims 1 to 5, **wherein** for starting playback of a certain program first a rough search based on the remain time and than a fine search based on an index search is performed.

**7.** Method according to any of the preceding claims, **wherein** the data assigned to the program comprise the title of the program and wherein the title is determined from data transmitted via teletext.

**8.** Apparatus for performing the method according to claim 1.
